Europäisches Patentamt

European Patent Office

Office européen des brevets

(11) Publication number: **0 156 497**
**B1**

(12) **EUROPEAN PATENT SPECIFICATION**

(45) Date of publication of patent specification: **04.05.88**

(21) Application number: **85301129.4**

(22) Date of filing: **20.02.85**

(51) Int. Cl.⁴: **G 03 B 27/54,** G 03 B 27/62

(54) Slide illumination device.

<table>
<tr><td>

(30) Priority: **24.02.84 NL 8400576**

(43) Date of publication of application:
**02.10.85 Bulletin 85/40**

(45) Publication of the grant of the patent:
**04.05.88 Bulletin 88/18**

(84) Designated Contracting States:
**DE FR GB IT NL SE**

(56) References cited:
**DE-A-2 518 394**
**GB-A-1 542 038**
**US-A-3 119 301**
**US-A-3 147 665**
**US-A-4 187 532**

</td><td>

(73) Proprietor: **HELIOPRINT AS**
**No. 16 Munkegaardsvej**
**DK-3490 Kvistgaard (DK)**

(72) Inventor: **Jensen, Jacob Nortoft**
**37 Fyrrebakken**
**DK-3400 Hillerod (DK)**

(74) Representative: **Carpmael, John William**
**Maurice et al**
**CARPMAELS & RANSFORD 43 Bloomsbury**
**Square**
**London, WC1A 2RA (GB)**

</td></tr>
</table>

Courier Press, Leamington Spa, England.

## Description

This invention relates to a slide illuminating device for a repro-camera, comprising a first light source and adapted to be disposed on an original holder of the repro-camera, the repro-camera being provided with a second light source for illuminating the original holder and with means for controlling the illumination.

To make a print from a transparent original on photographic material using a repro-camera, an original holder is frequently used in which the original can be back-lit. The transparent original is placed on a ground glass platen for this purpose and illuminated from the other side by fluorescent or incandescent lamps. The exposure time can be set by means of the time-switch in the repro-camera. If a large-format exposure is to be made from a small transparent original, e.g. a 35 mm transparency (24×36 mm), it is not possible to do this without difficulty using a standard repro-camera. The guide mechanisms do not enable the distance between the original holder and the lens to be made as small as required. One solution is to place the transparency on an elevated holder.

A step of this kind is described in German Offenlegungsschrift 25 18 394. In this prior art a slide illuminating device is placed on the original holder of a repro-camera and is provided with a transparent platen which can be exposed by means of a flash lamp disposed in the slide illuminating device. The transparency can be imaged on to the photographic film with a high magnification by way of the repro-camera lens. The exposure time is set by adjustment means situated on the slide illuminating device. The exposure is controlled by a built-in control circuit comprising a time switch and a counter. The required amount of light is provided by flash pulses generated by a control circuit and counted in a counter.

A disadvantage of the known device is that an extra time and control circuit is provided in the slide illuminating device in addition to the time and control circuit in the repro-camera. The use of two largely identical circuits in one apparatus is a very disadvantageous solution.

Also, automatic control of the main exposure and the additional exposures as used in many modern repro-cameras is impossible with the known device. Although it would be possible to control the lamp of the dias light with the means already present in the repro-camera for the purpose, the camera would have to be provided with the correct connecting means. This would make universal application of the slide illuminating device impossible.

The object of the invention is to provide a device in which these disadvantages are obviated.

To this end, a slide illuminating device according to the preamble is provided with a light-sensitive sensor device which actuates the first light source in response to receiving light from the second light source.

An advantage of a slide illuminating device of this kind is its universal application to practically each existing repro-camera without any need to alter the camera. Also, an automatic exposure control present in the camera can carry out the entire process as before.

Other features and advantages of the dias light according to the invention will become apparent from the following description with reference to the accompanying drawings wherein:

Fig. 1 represents a repro-camera with a slide illuminating device according to the invention,

Fig. 2 schematically represents a light-sensitive sensor device, and,

Fig. 3 is a cross-section through a slide illuminating device according to the invention.

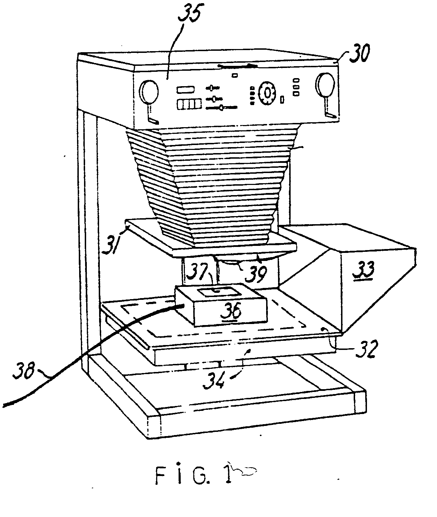

A repro-camera (Fig. 1) is provided with a platen 30 for photographic films and screens, a lens holder 31 and a transparent original holder 32. An original placed on the original holder 32 can be illuminated by lamps situated in container 33 or, in the case of a transparent original, by lamps situated in back-lighting container 34. The original is imaged on platen 30 by means of a lens 39 situated in lens holder 31. Lens holder 31 and the original holder 32 are movable with respect to the platen 30 so that different magnification ratios can be set.

This is done by setting means on the control panel 35, from which it is also possible to set other process parameters such as film sensitivity, screen data, exposure sensitivity, and so on. With conventional repro-cameras the magnification ratio can be varied between about 1:4 and 4:1. If a greater degree of enlargement than 1:4 is required, as often is the case, for example, with a transparency film (24×36 mm), a slide illuminating device 36 is placed on the original holder 32. The distance between the original (the transparency) and lens is thus reduced to a greater degree so that a larger enlargement can be made.

The slide illuminating device 36 has a transparent window 37 on which the transparency can be placed. The back of the window 37 can be exposed by means of TL lamps in the slide illuminating device. A light-sensitive sensor device is also provided, the light-sensitive element of which is disposed in the underside of the slide illuminating device 36.

The slide illuminating device is connected to the mains via a cord 38. When the light-sensitive element is exposed, the sensor device switches on the lamps of the slide illuminating device. If the lamps in the back-lighting container 34 are ignited, the lamps in the slide illuminating device will also be ignited by means of the light-sensitive sensor device. On expiry of the exposure time set on the control panel 35, the lamps in the back-lighting container 34 go out and as a result thereof also the lamps in the slide illuminating device go out.

It is possible that the light from the original holder 32 may cause a disturbance in the imagewise imaging of the transparency. To obviate this, the original holder can be covered with a black sheet of paper which passes the light from the lamps in the back-lighting container 34 at least at the place of the light-sensitive element.

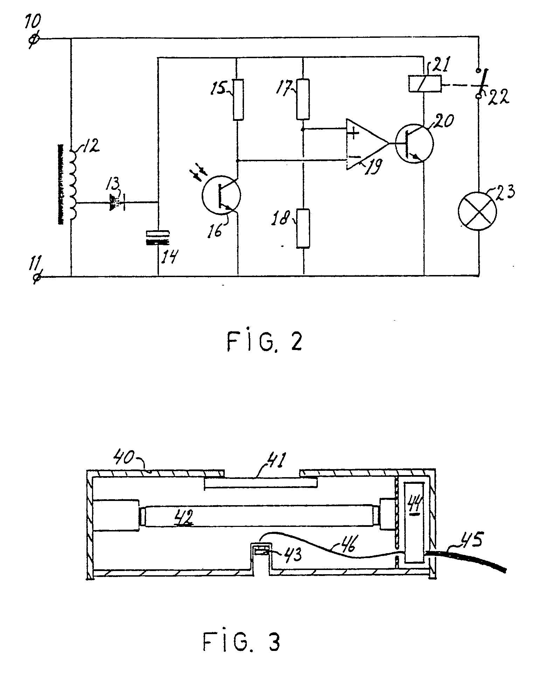

Fig. 2 schematically represents a light-sensitive sensor device.

The autotransformer 12 is provided with mains voltage via leads 10 and 11. A low d.c. voltage is tapped off the autotransformer 12 via diode 13 and is smoothed by means of capacitor 14. This d.c. voltage is fed via resistor 15 to the collector of phototransistor 16. IC 19 is connected as a comparator. The negative input of IC 19 is connected to the collector of phototransistor 16. Approximately half the d.c. voltage is applied to the positive input of IC 19 via a voltage divider formed by the resistors 17 and 18. If the voltage at the negative input of IC 19 is lower than the voltage at the positive input of IC 19, the output of IC 19 is high. If the voltage at the negative input is higher than the voltage at the positive input, the output of IC 19 is low.

If phototransistor 16 does not receive light, no current will flow through this transistor 16 and the voltage and the negative input of IC 19 thus becomes high. The output of IC 19, which is connected to the base of transistor 20, will thus become low and cut off transistor 20. Consequently no current will flow through relay 21 so that the contact 22 of relay 21 stays open. If light impinges on phototransistor 16, it will conduct and the voltage at the negative input of IC 19 becomes low. The output of IC 19 becomes high and transistor 20 conducts, so that current will flow through relay 21. The relay 21 energized in this way closes contact 22, and lamp 23 now connected to the mains voltage is ignited. The energization of relay 21 lasts for as long as phototransistor 16 receives light.

Fig. 3 represents a cross-section through a slide illuminating device according to the invention. A transparent window 41 of opal glass is disposed in a metal housing 40 and can be illuminated by means of a TL lamp 42. A light-sensitive element 43 is disposed in an opening in the bottom of housing 40 and is connected to the remainder of a light-sensitive sensor device 44 by means of a cord 46. The light-sensitive sensor device is connected to the mains via cord 45. There is no connection between the sensor device and the repro-camera.

The invention is in no way restricted to the embodiment described. For example, the light-sensitive element 16 in Fig. 2 may equally well be a selenium cell or a cadmium sulphide cell. The position of the light-sensitive element 43 in Fig. 3 can also be varied. An optical glass fibre can be disposed between one of the light sources of the repro-camera (main lighting lamps or back lighting lamps) and the element. In cameras without back lighting the element 43 can be disposed near the main lighting lamps via a cord, so as to ignite the lamps in the slide illuminating device in response to receiving light from the main lighting lamps.

## Claims

1. A slide illuminating device (36) for a repro-camera, comprising a first light source (23; 42) and adapted to be disposed on an original holder (32) of the repro-camera, the repro-camera being provided with a second light source for illuminating the original holder (32) and with means for controlling the illumination, characterised in that the slide illuminating device (36) is provided with a light-sensitive sensor device (16; 43, 44) which actuates the first light source (23; 42) in response to receiving light from the second light source.

2. A slide illuminating device for a repro-camera according to claim 1, characterised in that the sensor device (43, 44) comprises a light-sensitive element (16; 43) disposed in the bottom of the slide illuminating device.

3. A slide illuminating device for a repro-camera according to claim 1, characterised in that the sensor device (43, 44) comprise a light-sensitive element (16; 43) flexibly connected to the slide illuminating device by a cord (46).

4. A slide illuminating device for a repro-camera according to claim 1, characterised in that the sensor device (43, 44) comprises a light-sensitive element (16; 43) which receives light from the second light source via a bunch of glass fibres.

5. A slide illuminating device for a repro-camera according to claim 2, 3 or 4, characterised in that a light-impermeable plate is fixed to the slide illuminating device to cover the original holder (32), said plate being formed with an opening through which the light-sensitive element (43) can receive light from the second light source.

## Patentansprüche

1. Eine Dia-Beleuchtungsvorrichtung (36) für eine Reprokamera, die eine ersten Lichtquelle (23, 42) umfasst und zur Anbringung auf einer Original-Halterung (32) der Reprokamera vorgesehen ist, wobei die Reprokamera mit einer zweiten Lichtquelle für Beleuchtung der Original-Halterung und mit Mitteln zur Kontrolle der Beleuchtung versehen ist, dadurch gekennzeichnet, dass die Dia-Beleuchtungsvorrichtung mit einer lichtempfindlichen Fühlervorrichtung (16, 43, 44) versehen ist, die als Reaktion aus den Empfang von Licht von der zweiten Lichtquelle, die erste Lichtquelle betätigt.

2. Eine Dia-Beleuchtungsvorrichtung nach Anspruch 1, dadurch gekennzeichnet, dass die Fühlervorrichtung (43, 44) ein lichtempfindliches Element (16, 43) umfasst, das auf dem Boden der Dia-Beleuchtungsvorrichtung angebracht ist.

3. Eine Dia-Beleuchtungsvorrichtung nach Anspruch 1, dadurch gekennzeichnet, dass die Fühlervorrichtung (43, 44) ein lichtempfindliches Element (16, 43) umfasst, das durch eine Leitung (46) mit der Dia-Beleuchtungsvorrichtung flexibel verbunden ist.

4. Eine Dia-Beleuchtungsvorrichtung für eine Reprokamera nach Anspruch 1, dadurch gekennzeichnet, dass die Fühlervorrichtung (43, 44) ein lichtempfindliches Element (16, 43) umfasst, das durch ein Bündel Glasfasern Licht von der zweiten Lichtquelle erhält.

5. Eine Dia-Beleuchtungsvorrichtung für eine Reprokamera nach Anspruch 2, 3 oder 4, dadurch gekennzeichnet, dass eine lichtundurchlässige Platte an der Dia-Beleuchtungsvorrichtung befestigt ist, um die Original-Halterung (32) zu decken, wobei die betreffende Platte als eine Öffnung ausgestaltet ist, durch die das lichtempfindliche Element (43) Licht von der zweiten Lichtquelle erhalten kann.

**Revendications**

1. Dispositif d'illumination de diapositives pour une caméra de reproduction, comprenant une première source de lumière (23; 42) et adapté pour être placé sur un support d'original (32) de la caméra de reproduction, la caméra de reproduction étant pourvue d'une deuxième source de lumière pour l'illumination du support d'original (32) et de moyens de commande pour l'illumination, caractérisé en ce que le dispositif d'illumination de diapositives (36) est pourvu d'un capteur photosensible (16; 43, 44) actionnant la première source de lumière (23; 42) en réponse à la réception de lumière de la deuxième source de lumière.

2. Dispositif d'illumination de diapositives pour une caméra de reproduction selon la revendication 1, caractérisé en ce que le capteur (43, 44) comprend un élément photosensible (16, 43) placé dans le fond du dispositif d'illumination de diapositives.

3. Dispositif d'illumination de diapositives pour une caméra de reproduction selon la revendication 1, caractérisé en ce que le capteur (43, 44) comprend un élément photosensible (16; 43) relié de manière flexible au dispositif d'illumination de diapositives par un cordon (46).

4. Dispositif d'illumination de diapositives pour une caméra de reproduction selon la revendication 1, caractérisé en ce que le capteur (43, 44) comprend un élément photosensible (16; 43) qui reçoit de la lumière de la deuxième source de lumière par un faisceau de fibres de verre.

5. Dispositif d'illumination de diapositives pour une caméra de reproduction selon la revendication 2, 3 ou 4, caractérisé en ce qu'une plaque, imperméable à la lumière, est fixée au dispositif d'illumination de diapositives pour couvrir le support d'original (32), cette plaque étant formée avec une ouverture à travers laquelle l'élément photoélectrique (43) peut recevoir de la lumière de la deuxième source de lumière.

# 0 156 497

F i G. 1

FIG. 2

FIG. 3